Europäisches Patentamt

European Patent Office

Office européen des brevets

(19)

(11) Numéro de publication: **0 212 317**
**B1**

(12) # FASCICULE DE BREVET EUROPEEN

(45) Date de publication du fascicule du brevet:
**17.01.90**

(51) Int. Cl.⁴: **H01M 4/62, H01M 4/26**

(21) Numéro de dépôt: **86110191.3**

(22) Date de dépôt: **24.07.86**

(54) **Electrode à base d'oxyde de fer pour accumulateur alcalin et procédé de fabrication d'une telle électrode.**

(30) Priorité: **26.07.85 FR 8511463**

(43) Date de publication de la demande:
**04.03.87 Bulletin 87/10**

(45) Mention de la délivrance du brevet:
**17.01.90 Bulletin 90/3**

(84) Etats contractants désignés:
**AT BE CH DE FR GB IT LI LU NL SE**

(56) Documents cités:
**WO-A-84/00642**
**WO-A-84/02232**
**FR-A- 2 164 817**
**US-A- 2 727 080**
**US-A- 2 834 825**

(73) Titulaire: **Société Anonyme dite SAFT, 156, avenue de Metz, F-93230 ROMAINVILLE(FR)**

(72) Inventeur: **Brezillon, Jean-Loup, 4 rue de la Gare Parempuyre, F-33290 Blanquefort(FR)**
Inventeur: **Dauchier, Jean-Michel, 2 Allée des Graves, F-33127 Martignas sur Jalle(FR)**

(74) Mandataire: **Weinmiller, Jürgen et al, Lennéstrasse 9 Postfach 24, D-8133 Feldafing(DE)**

ACTORUM AG

## Description

La présente invention concerne une électrode à base d'oxyde de fer pour accumulateur alcalin.

Dans les batteries d'accumulateurs alcalins de ce genre, les électrodes couramment utilisées sont des électrodes frittées à base d'oxyde de fer et de cuivre.

Dans certaines applications, et pour des raisons de coût de fabrication, sont apparues des électrodes comprenant un support métallique sur lequel on fait adhérer une pâte active contenant la matière active proprement dite et un liant. Ce liant a pour fonction de permettre la manipulation industrielle de la matière active, sans perte de cette dernière. Par ailleurs, il doit être parfaitement stable dans l'électrolyte. Dans le cas du fer en effet, la présence de produits de dégradation dans l'électrolyte alcalin est prohibitive. Le fonctionnement de cette électrode est très sensible à la présence de molécules organiques dans l'électrolyte. Il est bien connu que la pollution par des traces de molécules telles que les polyalcools et la cellulose inhibent la réaction de décharge de l'électrode de fer.

On connaît des électrodes négatives à base de fer dans lesquelles le liant utilisé est du polytétrafluoréthylène (PTFE) à faible taux (entre 1% et 3% en poids de mélange). Ce plastomère présente une très bonne indifférence chimique à l'électrolyte alcalin des accumulateurs . Par contre, cette solution ne donne pas satisfaction du point de vue tenue mécanique.

La présente invention a pour but d'éviter ces inconvénients et de mettre en oeuvre, dans la masse active des électrodes à base d'oxyde de fer, un liant stable dans les électrolytes alcalins et susceptible d'améliorer notablement la tenue mécanique des électrodes.

La présente invention a pour objet une électrode à base d'oxyde de fer, caractérisée par le fait que sa masse active contient un copolymère carboxylé de styrène-butadiène, à l'état réticulé, dans une proportion comprise entre 1% et 2,5% en poids.

Selon un perfectionnement, la pâte active de l'électrode contient en outre une faible quantité de polytétrafluoréthylène comprise entre 0,2% et 2% en poids (en extrait sec). Cet ajout confère à cette pâte un certain caractère hydrophobe, et limite son adhérence lors de la mise en forme des électrodes.

La présente invention a également pour objet un procédé de réalisation d'une électrode pour accumulateur alcalin constituée d'une masse électrochimiquement active à base d'oxyde de fer accrochée sur un support métallique, caractérisé par le fait que :
- on prépare la pâte active en mélangeant la matière active proprement dite et une suspension dans l'eau de micelles de copolymère carboxylé de styrène-butadiène,
- on applique ladite pâte sur ledit support métallique par calandrage ou enduction,
- on sèche et on porte l'ensemble à une température comprise entre 120°C et 150°C pendant quelques minutes pour obtenir la réticulation dudit copolymère.

Selon un perfectionnement on ajoute au mélange, lors de la préparation de la pâte active, une petite quantité de polytétrafluoréthylène dans les proportions indiquées plus haut.

D'autres caractéristiques et avantages de la présente invention apparaîtront au cours de la description suivante de modes de réalisation données à titre d'exemple illustratif mais non limitatif.

On prépare une électrode négative à base de fer de la manière décrite ci-dessous.

On réalise tout d'abord le mélange suivant :

matière active : magnétite $Fe_3O_4$ : 95 % à 97%

PTFE : 0,2% à 2%

additifs (sulfure de nickel par exemple, eau) : 2,5% à 3%

On malaxe ce mélange en présence d'eau et d'un liant sous forme de latex, c'est-à-dire d'une suspension dans l'eau de micelles de copolymère styrène-butadiène carboxylé. La quantité de ce polymère peut varier de 1% à 2,5% (en extrait sec) selon la solidité visée pour l'électrode terminée.

On peut noter que le polytétrafluoréthylène peut être introduit sous forme d'émulsion après la phase de malaxage du latex.

La viscosité de la pâte peut être modifiée par ajout d'eau ; elle est par exemple de l'ordre de $3 \times 10^3$ Pa.s ($3 \times 10^6$ centipoises).

La mise en forme des électrodes se fait par calandrage de la pâte humide sur les deux faces d'un collecteur métallique. Celui-ci peut être un feuillard d'acier déployé ou perforé, recuit ou non. Ce peut être aussi tout support traité de manière à avoir un taux de perforations supérieur ou égal à 40% ; l'adhérence de la matière active est assurée par le rivetage à travers les trous du support des deux couches déposées de part et d'autre, dont l'épaisseur est de l'ordre de 0,7 mm à 0,9 mm.

La bande ainsi obtenue subit un séchage complet et un traitement thermique à une température allant de 120°C à 150°C pendant une durée comprise entre une et cinq minutes. Ce traitement est suffisant pour assurer la réticulation du polymère.

Les électrodes ainsi obtenues sont caractérisées par une très bonne tenue mécanique : résistance aux chocs et à l'effritement. Elles présentent de ce fait un caractère non polluant ; l'oxyde métallique, finement divisé, qui constitue la matière active n'a pas tendance à se libérer lors de la manipulation des électrodes.

Selon un autre mode de mise en oeuvre, les électrodes sont mises en forme par enduction.

On mélange dans l'eau les éléments suivants :

- matière active : magnétite Fe₃O₄ 95 % à 97%
- additifs 2,5% à 3 %
- produit gélifiant 0,3 % à 3 %

Les additifs peuvent être par exemple le sulfure de nickel.

Le produit gélifiant peut être le carboxyméthylcellulose, le méthocel, l'éthylméthylcellulose.

Cet ensemble est mélangé et malaxé par exemple dans un appareil de type pétrin planétaire. On y ajoute le copolymère carboxylé de styrène butadiène dans une proportion comprise entre 1% et 2,5%.

La viscosité de la pâte obtenue est comprise entre $10^2$–$25.10^2$ Pa.s ($10^5$ et $25.10^5$ centipoises).

Le support de l'électrode est défini d'une manière identique à celui utilisé lors du calandrage.

La masse active est déposée de part et d'autre par passage de ce support dans un bac contenant la pâte. Le dépôt obtenu est régularisé avec un dispositif à lèvres d'écartement contrôlé.

La suite des opérations (séchage et traitement thermique) est la même qu'après le calandrage.

On constate un accroissement d'un facteur de l'ordre de trois de l'adhérence mesurée au cisaillement, par rapport aux pâtes actives ne contenant que du polytétrafluoréthylène.

On constate par ailleurs l'absence de tout produit de dégradation dans l'électrolyte alcalin.

Bien entendu l'invention n'est pas limitée aux modes de réalisation qui viennent d'être décrits. On pourra, sans sortir du cadre de l'invention remplacer tout moyen par un moyen équivalent.

**Revendications**

1/ Electrode à base d'oxyde de fer pour accumulateur alcalin, caractérisée par le fait que sa masse active contient un copolymère carboxylé de styrène-butadiène à l'état réticulé, dans une proportion comprise entre 1% et 2,5% en poids.

2/ Electrode selon la revendication 1, caractérisée par le fait que la masse active contient en outre du polytétrafluoréthylène, dans une proportion correspondant à 0,2% à 2% en poids de masse active à l'état sec initial.

3/ Procédé de fabrication d'une électrode selon l'une des revendications précédentes, caractérisé par le fait que l'on prépare ladite masse active sous forme d'une pâte, qu'on l'applique sur un collecteur de courant métallique par calandrage ou enduction, qu'on sèche, et qu'on soumet l'ensemble à une température comprise entre 120°C et 150°C pendant quelques minutes, de manière à obtenir la réticulation dudit polymère.

**Claims**

1. An iron oxide based electrode for an alkaline accumulator, characterized in that its active mass contains a copolymer of carboxylated styrene-butadiene in the cross-linked state, in a proportion lying in the range 1% to 2, 5% by weight.

2. An electrode according to claim 1, characterized in that the active mass also contains polytetrafluoroethylene in a proportion lying in the range 0,2% to 2% by weight of active mass in the initial dry state.

3. A method of manufacturing an electrode according to claim 1 or 2, characterized in that said active mass is prepared in the form of a paste, said paste is applied on a metal current collector by calendering or by coating, said paste-covered current collector is dried, and said dried assembly is subjected to a temperature lying in the range 120°C to 150°C for a period of a few minutes in order to cause said copolymer to cross-link.

**Patentansprüche**

1. Elektrode auf Eisenoxidbasis für alkalische Akkumulatoren, dadurch gekennzeichnet, daß ihre aktive Masse ein karboxyliertes Kopolymer von Styrol-Butadien im vernetzten Zustand mit einem Gewichtsanteil zwischen 1 und 2,5% enthält.

2. Elektrode nach Anspruch 1, dadurch gekennzeichnet, daß die aktive Masse weiter Polytetrafluoräthylen mit einem Gewichtsanteil von 0,2 bis 2% der aktiven Masse im Ausgangszustand enthält.

3. Verfahren zur Herstellung einer Elektrode nach einem der vorhergehenden Ansprüche, dadurch gekennzeichnet, daß die aktive Masse in Form einer Paste zubereitet, auf einen metallischen Stromkollektor durch Kalandrieren oder Aufstreichen aufgetragen, getrocknet und mit dem Kollektor während einiger Minuten einer Temperatur von 120°C bis 150°C ausgesetzt wird, so daß die Vernetzung des Polymers erfolgt.